# EUROPEAN PATENT SPECIFICATION

(11) **EP 0 797 925 B1**
(45) Date of publication and mention of the grant of the patent: **14.11.2001**
(21) Application number: 96104826.1
(22) Date of filing: 27.03.1996
(51) Int. Cl.: A23J 3/08, A23J 3/14, A23L 1/22, A23J 1/20

(54) **Encapsulated particles in protein from a polysaccharide-containing dispersion**
Protein-verkapselte Teilchen aus einer Polysaccharid-enthaltender Dispersion
Particules encapsulés dans de la protéine, à partir d'une dispersion contenant des polysaccharides

(43) Date of publication of application: 01.10.1997
(73) Proprietor: SOCIETE DES PRODUITS NESTLE S.A., 1800 Vevey (CH)
(72) Inventor: Tolstoguzov, Vladimir Borisovich, 1009 Pully (CH); Rivier, Vincent, 1033 Cheseaux (CH)
(74) Representative: Pate, Frederick George

(56) References cited:
- EP-A- 0 082 460
- WO-A-91/12727
- WO-A-92/05708
- DE-A- 2 420 700
- DE-A- 4 033 690
- DE-C- 669 225
- DE-C- 702 866
- FR-A- 2 090 570
- FR-A- 2 090 572
- FOOD HYDROCOLLOIDS, vol. 2, no. 5, 1988, pages 339-370, XP002008840 TOLSTOGUZOV: "SOME PHYSICO-CHEMICAL ASPECTS OF PROTEIN PROCESSING INTO FOODSTUFFS"
- PATENT ABSTRACTS OF JAPAN vol. 006, no. 114 (C-110), 25 June 1982 & JP-A-57 043647 (KIMITSU KAGAKU KENKYUSHO KK), 11 March 1982,

## Description

The present invention relates to a process for encapsulating solid particles within a protein.

In Food Hydrocolloids Vol. 2 No. 3 pp. 195-207, 1988, there is described a method of purifying and concentrating protein solutions, a method called membraneless osmosis.

The basic idea underlying the membraneless osmosis process involves two physico-chemical phenomena (i) the thermodynamic incompatibility in solution of mixtures of different proteins as well as of proteins and polysaccharides at a pH above the protein isoelectric point; and (ii) a high asymmetry of phase diagrams of aqueous mixtures of these biopolymers. This means that mixtures of protein and polysaccharide solutions can separate into two phases, one which is relatively rich in the protein and another which is relatively rich in the polysaccharide. The difference between the concentrations of macromolecular components in the co-existing phases may be 10-fold or even more. Unlike the osmosis phenomenon, i.e. diffusion transfer of a solvent from the solution through a semi-permeable membrane separating the solvent from the solution, the membraneless osmosis process uses two solutions of thermodynamically incompatible macromolecular substances with different solvent chemical potentials. The function of a membrane in this process is performed by the interface between the two phases. This process is called membraneless osmosis, because it involves the transfer of a solvent, namely water, from one solution to another through the interface between the two phases. In other words, the membraneless osmosis uses two types of phase-forming macromolecular substances. One is a target to be concentrated, while the other, more hydrophilic, is diluted as the former is concentrated. Food proteins are concentrated using polymers suitable for use in foodstuffs. Usually these are polysaccharides.

Generally, membraneless osmosis may be worthwhile, as an industrial-scale process, only if polysaccharides can be recovered more easily and cheaply from the dilute solution than proteins. It is therefore critically important to recycle the polysaccharide - to recover it from the dilute polysaccharide phase and re-use it in the process. It is also possible to make use of dilute polysaccharide solutions for some other purpose, e.g. to produce food products such as various drinks, jellies and whipped products. The use of anionic polysaccharides seems to be most promising, because it is easy to precipitate them from dilute solutions in the form of complexes with proteins at pH values below the protein isoelectric point.

We have found that, by using a process which we believe is membraneless osmosis, it is possible to encapsulate solid particles within a protein.

According to the present invention there is provided a process for encapsulating solid particles within a protein which comprises contacting a protein dispersion containing the solid particles with a polysaccharide in an aqueous medium at a pH above the isoelectric point of the protein to produce a mixture forming two phases, one of which is a concentrated heavier, lower phase comprising the solid particles encapsulated within the protein and the other of which is a diluted, lighter upper phase relatively rich in polysaccharide, and separating the concentrated, heavier lower phase to produce the solid particles encapsulated within the protein.

The solid particles contained within the protein dispersion may be food ingredients such as cocoa fines, finely ground spices such as garlic or onions, flavours, peptides, other proteins, insoluble materials such as lipid droplets, living organisms such as bacteria, spores or viruses and meat particles including meat chunks.

The amount of the solid particles dispersed in the protein may be from 1% to 10% by weight based on the total weight of the protein in the dispersion.

The average diameter of the solid particles may vary from 5 µm to 5 millimetres.

The protein material may be, for example, milk, skim milk, a vegetable extract containing protein such as soya bean milk or lupin bean milk, blood protein or coconut milk.

The polysaccharide may be neutral or anionic, e.g. pectin such as high methoxy pectin, an alginate, arabic gum, locust bean gum or kappa-, lambda-, or iota-carrageenan. The polysaccharide may be used as a suspension, dispersion or solution in water. If desired, two or more polysaccharides may be used.

The protein material may be contacted with the polysaccharide by adding either component to the other or by mixing the two components together. The solid particles may be mixed with the protein before mixing with the polysaccharide.

The concentration of the protein in the protein material may be from 1 to 30% by weight and preferably from 2 to 25% by weight based on the total weight of the protein material. The concentration of the polysaccharide in the aqueous medium may be from 0.1 to 10% by weight and preferably from 0.2 to 7.5% by weight based on the total weight of the aqueous medium.

The temperature at which the protein material together with the solid particles is contacted with the polysaccharide may be from 0°C to a temperature above the denaturing temperature of the protein, e.g. from 2°C to 70°C preferably from 10°C to 40°C and especially from 20°C to 35°C.

The mixture of the solid particles encapsulated within the protein material and the polysaccharide may be separated in the two phases simply by settling, i.e. by standing for a period of a few seconds to a few minutes. However, the mixture is preferably agitated and then centrifuged to separate the two phases. If desired, the mixture may be centrifuged to separate the two phases without previous agitation. The upper light phase rich in polysaccharide may conveniently be removed by decantation.

When the mixture is agitated, this may conveniently be carried out by gentle stirring for a period of time from 1 second to 60 minutes, preferably from 1 to 40 minutes and more preferably from 5 to 30 minutes.

When centrifugation is carried out, the duration of the centrifugation may be from 1 to 60 minutes and preferably from 5 to 30 minutes. The centrifugation may have an acceleration of from 1000 to 100000 g, preferably from 5000 to 50000 g and especially from 10000 to 30000 g.

The pH is preferably from pH 7 to pH 10 provided that it is above the isoelectric point of the particular protein.

Although not wishing to be bound by theory, it is thought that the encapsulation of dispersed particles arises when the proteins, which are incompatible with the polysaccharide molecules, concentrate around the solid particles encapsulating them and causing them to separate, e.g. by sedimentation. Before separation, the protein may be gelified to form the coating either by heating or by adding salt.

The encapsulated products may be used as additives for food products e.g. as flavours, or as new food products or even new food systems.

The following Examples further illustrate the present invention.

### EXAMPLE 1

To 600 ml of skim milk are added 10 g of cocoa fines to form a dispersion. To this dispersion are added 200 ml of a suspension of high methoxy pectin at a concentration of 0.5% by weight. The mixture forms two phases, a heavier phase comprising the cocoa fines encapsulated within casein and a lighter phase rich in high methoxy pectin. The heavier phase is separated from the lighter phase by centrifugation at 1000 g for 15 minutes. The encapsulated cocoa fines are separated from the heavier phase by further centrifugation.

### EXAMPLE 2

To 600 of soya milk are added 20 ml of insoluble lipid droplets to form a dispersion. To this dispersion are added 200 ml of a suspension of high methoxy protein at a concentration of 0.5% by weight. The mixture forms two phases, a heavier phase comprising the lipid droplets encapsulated within the soya proteins and a lighter phase rich in high methoxy pectin. The heavier phase is separated from the lighter phase by centrifugation at 1000 g for 15 minutes. The encapsulated lipid droplets are separated from the heavier phase by further centrifugation.

## Claims

1. A process for encapsulating solid particles within a protein which comprises contacting a protein dispersion containing the solid particles with a polysaccharide in an aqueous medium at a pH above the isoelectric point of the protein to produce a mixture forming two phases, one of which is a concentrated heavier, lower phase comprising the solid particles encapsulated within the protein and the other of which is a diluted, lighter upper phase relatively rich in polysaccharide, and separating the concentrated, heavier lower phase to produce the solid particles encapsulated within the protein.

2. A process according to claim 1 wherein the solid particles are cocoa fines, finely ground spices, flavours, peptides, lipid droplets, meat particles, bacteria, spores or viruses.

3. A process according to claim 1 wherein the amount of solid particles dispersed in the protein is from 1% to 10% by weight based on the total weight of the protein in the dispersion.

4. A process according to claim 1 wherein the average diameter of the solid particles is from 5 µm to 5 millimetres.

5. A process according to claim 1, wherein the protein material is milk, skim milk, soya milk or lupin protein.

6. A process according to claim 1 wherein the polysaccharide is high methoxy pectin, an alginate, arabic gum, locust bean gum or kappa-, lambda- or iota-carrageenan.

7. A process according to claim 1 wherein the concentration of the protein in the protein material is from 1 to 30% by weight based on the total weight of the protein material.

8. A process according to claim 1 wherein the concentration of the polysaccharide in the aqueous medium is from 0.1 to 10% by weight based on the total weight of the aqueous medium.

9. A process according to claim 1 wherein the mixture is agitated and then centrifuged to separate the two phases.

10. A process according to claim 1 wherein the mixture is separated into two phases by centrifugation at an acceleration from 100 to 10000 g for from 1 to 60 minutes.

## Patentansprüche

1. Verfahren zur Einkapselung fester Teilchen in ein Protein, welches umfasst, Inkontakt-Bringen einer Protein-Dispersion, die die festen Teilchen enthält, mit einem Polysaccharid in einem wässerigen Medium bei einem pH-Wert oberhalb des isoelektrischen Punktes des Proteins, um ein zwei Phasen bildendes Gemisch herzustellen, wobei eine Phase eine konzentrierte, schwerere, untere Phase darstellt, die die festen, in das Protein eingekapselten Teilchen umfasst, und die andere eine verdünnte, leichtere, obere Phase ist, die relativ reich an Polysaccharid ist, und Abtrennen der konzentrierten, schwereren, unteren Phase, um die in das Protein eingekapselten, festen Teilchen herzustellen.

2. Verfahren nach Anspruch 1, wobei die festen Teilchen feinste Kakao-Teilchen, fein gemahlene Gewürze, Aromen, Peptide, Fett-Tröpfchen, Fleisch-Teilchen, Bakterien, Sporen oder Viren sind.

3. Verfahren nach Anspruch 1, wobei die Menge an festen, in dem Protein dispergierten Teilchen von 1 Gew.-% bis 10 Gew.-%, bezogen auf das Gesamtgewicht des Proteins in der Dispersion, ist.

4. Verfahren nach Anspruch 1, wobei der Durchschnittsdurchmesser der festen Teilchen von 5 µm bis 5 Millimeter sind.

5. Verfahren nach Anspruch 1, wobei das Proteinmaterial Milch, Magermilch, Sojamilch oder Lupinen-Protein ist.

6. Verfahren nach Anspruch 1, wobei das Polysaccharid ein Pektin mit hohem Methoxygruppen-Gehalt, ein Alginat, Gummi Arabicum, Gummi des Johannisbrotkerns oder kappa-, lambda- oder iota-Karrageenan ist.

7. Verfahren nach Anspruch 1, wobei die Proteinkonzentration in dem Proteinmaterial von 1 bis 30 Gew.-%, bezogen auf das Gesamtgewicht des Proteinmaterials, ist.

8. Verfahren nach Anspruch 1, wobei die Polysaccharidkonzentration in dem wässerigen Medium von 0,1 bis 10 Gew.-%, bezogen auf das Gesamtgewicht des wässerigen Mediums, ist.

9. Verfahren nach Anspruch 1, wobei das Gemisch zur Abtrennung der beiden Phasen gerührt und anschließend zentrifugiert wird.

10. Verfahren nach Anspruch 1, wobei das Gemisch durch Zentrifugation bei einer Beschleunigung von 100 bis 10.000 g für 1 bis 60 Minuten in zwei Phasen getrennt wird.

## Revendications

1. Procédé pour encapsuler des particules solides dans une protéine, qui comprend la mise en contact d'une dispersion de protéine contenant les particules solides avec un polysaccharide dans un milieu aqueux à un pH supérieur au point isoélectrique de la protéine pour produire un mélange formant deux phases, dont l'une est une phase inférieure plus lourde concentrée comprenant les particules solides encapsulées dans la protéine et l'autre est une phase supérieure plus légère diluée relativement riche en polysaccharide, et la séparation de la phase inférieure plus lourde concentrée pour produire les particules solides encapsulées dans la protéine.

2. Procédé suivant la revendication 1, dans lequel les particules solides sont des particules fines de cacao, des épices finement broyées, des agents aromatisants, des peptides, des gouttelettes lipidiques, des particules de viande, des bactéries, des spores ou des virus.

3. Procédé suivant la revendication 1, dans lequel la quantité de particules solides dispersées dans la protéine est comprise dans l'intervalle de 1 % à 10 % en poids sur la base du poids total de la protéine dans la dispersion.

4. Procédé suivant la revendication 1, dans lequel le diamètre moyen des particules solides est compris dans l'intervalle de 5 *µ*m à 5 millimètres.

5. Procédé suivant la revendication 1, dans lequel la matière protéique consiste en lait, lait écrémé, lait de soja ou protéine de lupin.

6. Procédé suivant la revendication 1, dans lequel le polysaccharide consiste en une pectine à haute teneur en groupes méthoxy, un alginate, la gomme arabique, la gomme de caroube ou la kappa-, lambda- ou iota-carraghénine.

7. Procédé suivant la revendication 1, dans lequel la concentration de la protéine dans la matière protéique est comprise dans l'intervalle de 1 à 30 % en poids sur la base du poids total de la matière protéique.

8. Procédé suivant la revendication 1, dans lequel la concentration du polysaccharide dans le milieu aqueux est comprise dans l'intervalle de 0,1 à 10 % en poids sur la base du poids total du milieu aqueux.

9. Procédé suivant la revendication 1, dans lequel le mélange est agité et ensuite centrifugé pour séparer les deux phases.

10. Procédé suivant la revendication 1, dans lequel le mélange est séparé en deux phases par centrifugation à une accélération de 100 à 10 000 x g pendant un temps de 1 à 60 minutes.
